# EUROPEAN PATENT APPLICATION

(11) **EP 4 671 089 A1**
(43) Date of publication of application: **31.12.2025**
(21) Application number: 25180516.4
(22) Date of filing: 03.06.2025
(51) Int. Cl.: B62B 7/06, B62B 7/14, B62B 9/12, B62B 9/20, B62B 9/24, B62B 9/26

(54) **STROLLER AND TRAY**

(30) Priority: 03.06.2024 US 202463655300 P; 02.10.2024 US 202463702356 P; 28.05.2025 US 202563813149 P
(71) Applicant: Hoffman, Herbert E., Morgantown PA 19543 (US); Arsenault, Clair, Morgantown PA 19543 (US); Beiler, Matthew, Morgantown PA 19543 (US); Ingraham, Jerry S., Morgantown PA 19543 (US)
(72) Inventor: Hoffman, Herbert E., Morgantown PA 19543 (US); Arsenault, Clair, Morgantown PA 19543 (US); Beiler, Matthew, Morgantown PA 19543 (US); Ingraham, Jerry S., Morgantown PA 19543 (US)
(74) Representative: Lucke, Andreas

(57) **Abstract**

A stroller assembly can include a stroller frame with a front leg and first and second rear legs. The front leg having at least one front wheel connected thereto. The first and second rear legs have rear wheels connected thereto. The rear wheels are rotatable about a horizontal rotation axis of the rear wheels. The rear wheels are spaced from the at least one front wheel in a rearward direction, with the rearward direction being perpendicular to the horizontal rotation axis. A handle assembly is connected to the front leg and the rear legs. The handle assembly includes a handlebar positioned between the first and second rear wheels. The handlebar is aligned with a vertical axis extending through and perpendicular to the horizontal rotation axis, or offset from the vertical axis such that the handlebar is positioned closer to a center of the stroller frame than the horizontal rotation axis.

## Description

### CROSS REFERENCE TO RELATED APPLICATIONS

This application claims the benefit of U.S. Provisional Application No. 63/813,149 filed May 28, 2025, U.S. Provisional Application No. 63/702,356 filed October 2, 2024, and U.S. Provisional Application No. 63/655,300 filed June 3, 2024, which are incorporated by reference as if fully set forth.

### FIELD OF THE INVENTION

The present disclosure generally relates to systems, assemblies, and methods for a stroller assembly, and more particularly, relates to a stroller handlebar orientation and a tray connectable to the stroller assembly.

### BACKGROUND OF THE INVENTION

Caregivers usually rely on a stroller apparatus to transport babies and children. A stroller apparatus is typically constructed from a rigid frame that can be collapsed for convenient storage or transport and unfolded for use. The stroller apparatus includes a handlebar that allows the caregiver to grip and move the stroller. The position and configuration of the handlebar can play an important role in the use and stability of the stroller. For conventional strollers, placing the caregiver's weight or even placing a small bag around the handlebar area on the stroller without the child secured in the seat can cause the stroller to topple.

Some strollers may provide an optional armbar to mount across a seat for a child to hold and to aid in retaining the child in the stroller. For holding a child's toys, snacks, and/or drink, a conventional stroller may include a tray that mounts directly to an existing armbar. The armbar and/or tray can interfere with the folding of the stroller and create a hazard by decreasing the opening size in front of the stroller for the occupant.

The foregoing needs are met, to a great extent, by the stroller assembly disclosed in the present application.

### SUMMARY OF THE INVENTION

According to one aspect, a stroller assembly includes a stroller frame having a front leg with at least one front wheel connected thereto, a first rear leg and a second rear leg connected to the front leg. The first and second rear legs having a rear wheel connected to each one of the first and second rear legs. The rear wheels being rotatable about a horizontal rotation axis of the rear wheels, and the rear wheels being spaced from the at least one front wheel in a rearward direction. The rearward direction being perpendicular to the horizontal rotation axis. A handle assembly is connected to the front leg and the first and second rear legs, the handle assembly comprising a handlebar positioned between the rear wheels. The handlebar is aligned with a vertical axis extending through and perpendicular to the horizontal rotation axis, or offset from the vertical axis such that the handlebar is positioned closer to a center of the stroller frame than the horizontal rotation axis.

In one aspect, the first and second rear legs are rotatably connected to the front leg through a rotatable hub.

In one aspect, the handle assembly is transitionable between a first height above a support surface and a second height above the support surface, wherein the second height is greater than the first height.

In one aspect, at the second height the handlebar is vertically above the handlebar at the first height, such that the handlebar transitions to the second height from the first height in a vertical direction.

In one aspect, at the second height the handlebar is vertically above and rearwardly offset from the handlebar at the first height.

In one aspect, the rearward direction extends from the front wheel to rear wheels.

In one aspect, a carrier is connectable to and removable from the stroller frame.

In one aspect, at least one of the front wheel and the rear wheels comprises a castor wheel.

In one aspect, a space is defined between the rear wheels such that a foot of a caregiver can pass through the horizontal rotation axis extending between the rear wheels.

In one aspect, the rear wheels are only connected to each other through the rear legs, and the front leg or the handle assembly, of the stroller frame.

In one aspect, a hook is configured to support a weight applied to the stroller frame.

In one aspect, a first hook is coupled to the stroller frame on a first lateral side of the stroller frame, and a second hook is coupled to the stroller frame on a second lateral side of the stroller frame.

In one aspect, the hook is coupled to the stroller frame adjacent a handlebar extender of the handle assembly.

In one aspect, the handlebar extender is a telescopic handlebar extender.

In one aspect, a lock is disposed between the handle assembly and a hook coupled to the stroller frame.

In one aspect, the lock is coupled to a lower tube of the handle assembly, and the lock is spring biased radially outwards relative to the lower tube.

In one aspect, a shaft portion of the lock is configured to translate into an aperture within the handle assembly when a force is applied to a head portion of the lock, causing the lock to translate radially inwards relative to the lower tube.

In one aspect, the shaft portion being engaged with the aperture causes the lock to be in a locked configuration, preventing the handlebar from translating relative to the lower tube.

In one aspect, when the force is removed from the lock, a spring of the lock forces the lock radially outwards relative to the lower tube, into an unlocked configuration.

According to another aspect, a stroller assembly includes a stroller frame having front legs, rear legs, and a handle assembly. A carrier is connectable to and removable from the stroller frame. An accessory is connectable to and removable from at least one of the stroller frame and the carrier. The accessory comprises an accessory tray, a pivot connector, and an arm including a connector. The connector being configured to engage either one of a first stroller connector and a second stroller connector, and the accessory tray is pivotably connected to the arm through the pivot connector.

In one aspect, the accessory tray includes a tray portion and a cup holder portion.

In one aspect, the connector includes a connector slot extending through a sidewall of the arm, the connector slot being configured to engage a portion of the first or second stroller connector.

In one aspect, the connector slot is aligned with a centerline of an outside surface of the arm, and the connector slot intersects a pivot axis of the pivot connector.

In one aspect, the pivot connector is positioned between the accessory tray and the arm.

According to yet another aspect, an accessory tray assembly for a stroller is disclosed. The accessory tray assembly includes an arm with a connector having a connector slot defining a centerline, an accessory tray, and a pivot connector positioned between the arm and the accessory tray, the pivot connector being located along the centerline.

In one aspect, the accessory tray includes a tray portion and a cup holder portion.

In one aspect, the connector slot extends through a sidewall of the arm, the connector slot being configured to engage a portion of a first or second stroller connector.

In one aspect, the connector slot is aligned with a centerline of an outside surface of the arm, and the connector slot intersects a pivot axis of the pivot connector.

In one aspect, the pivot connector is positioned between the accessory tray and the arm.

This summary is provided to introduce a selection of concepts in a simplified form. This Summary is not intended to identify key features or essential features of the claimed subject matter, nor is it intended to be used to limit the scope of the claimed subject matter. Furthermore, the claimed subject matter is not constrained to limitations that solve any or all disadvantages noted in any part of this disclosure.

### BRIEF DESCRIPTION OF THE DRAWINGS

The foregoing Summary as well as the following Detailed Description will be best understood when read in conjunction with the appended drawings, which illustrate embodiments of the disclosure. In the drawings:
FIG. 1 is a side view of a stroller assembly according to a first embodiment of the present disclosure.
FIG. 2 is a perspective view of the stroller assembly of FIG. 1 with a carrier removed.
FIG. 3 is a side view of a stroller assembly according to a second embodiment of the present disclosure.
FIG. 4 is a perspective view of a stroller assembly according to a third embodiment of the present disclosure.
FIG. 5 is a side view of the stroller assembly of FIG. 4.
FIG. 6 is a front view of the stroller assembly of FIG. 4.
FIG. 7 is a first magnified partial cross-sectional view of a hook of the stroller assembly of FIG. 4.
FIG. 8 is a second magnified partial cross-sectional view of the hook of the stroller assembly of FIG. 4.
FIG. 9 is a third magnified partial cross-sectional view of the hook of the stroller assembly of FIG. 4.
FIG. 10 is a front view of an accessory connectable to a stroller assembly.
FIG. 11 is a rear view of the accessory of FIG. 10.
FIG. 12 is a first perspective view of the accessory of FIG. 10.
FIG. 13 is a second perspective view of the accessory of FIG. 10.
FIG. 14 is another front view of the accessory of FIG. 10.
FIG. 15 is a side view of the accessory of FIG. 10.
FIG. 16 is a magnified view of a stroller without an accessory attached.
FIG. 17 is a magnified front view of a stroller connector of the stroller of FIG. 16.
FIG. 18 is a magnified perspective view of the stroller connector of FIG. 17.
FIG. 19 is a magnified side view of the stroller connector of FIG. 17.
FIG. 20 is a front view of a stroller with an accessory connected to a first stroller connector.
FIG. 21 is a front view of the stroller of FIG. 20 with the accessory connected to a second stroller connector, and in the process of rotating.
FIG. 22 is a front view of the stroller of FIG. 20 with the accessory connected to the second stroller connector.
FIG. 23 is a front view of the stroller of FIG. 20 with the accessory connected to the first stroller connector, and in the process of rotating.

### DETAILED DESCRIPTION OF THE PREFERRED EMBODIMENTS

Certain terminology is used in the following description for convenience only and is not limiting. The words "front", "rear", "upper", and "lower" designate directions in the drawings to which reference is made. The words "inwardly" and "outwardly" refer to directions towards and away from parts referenced in the drawings. "Axially" refers to a direction along the axis of a shaft (or shaft-like structure), or a direction along a rotation axis. A reference to a list of items that are cited as "at least one of a, b, or c" (where a, b, and c represent the items being listed) means any single one of the items a, b, or c, or combinations thereof. The terms "about" and "approximately" are to be construed as within 10% of a stated value or ratio. The terminology includes the words specifically noted above, derivatives thereof, and words of similar import.

Many currently available child strollers offer storage at the base of the stroller beneath the child in the form of a basket or storage compartment. However, the location of the basket or storage compartment prevents the caretaker from readily accessing their items (i.e. purse, small bag, etc.) in the basket or storage compartment. Because of this, the caretaker may desire to stow their small bag or purse at the handle area. For current strollers on the market, placing the caretaker's own weight or even placing a small bag around the handle area on the stroller, without the child secured in the seat, causes the stroller to topple or tip over in a backwards direction about the rear wheels. The stroller assembly 10 of the present disclosure alleviates this issue by increasing the distance between the rear wheels 24 and the front wheels 22, such that the rear wheels 24 are aligned with the handlebar 32 or further from the center of the stroller assembly 10 than the handlebar 32. By making the handlebar 32 and rear wheels 24 aligned, there is a decreased moment arm at the handlebar 32, preventing or reducing the chances of the stroller from toppling or tipping over when weight is applied to the handlebar 32.

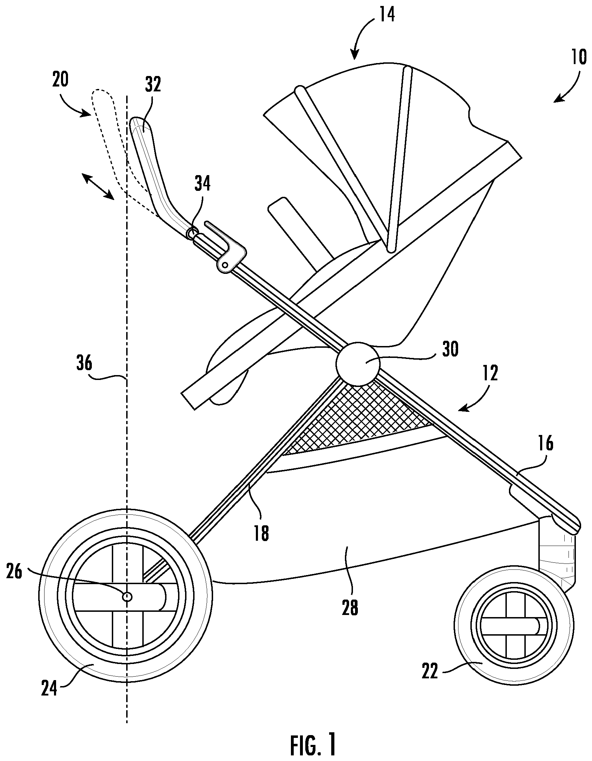

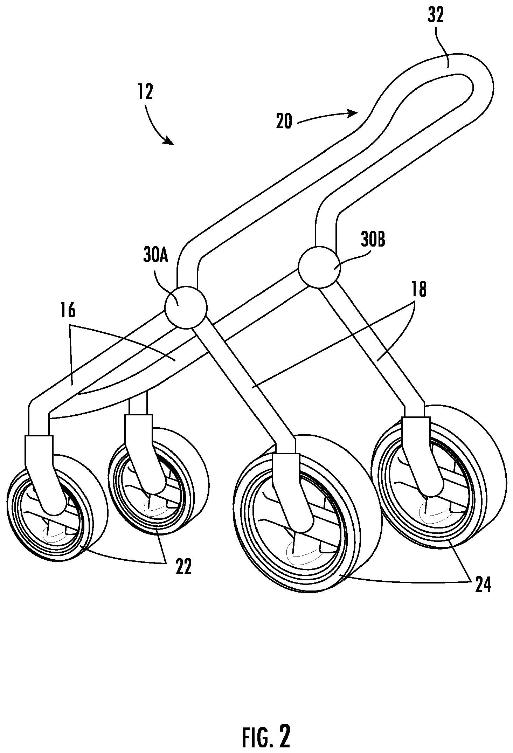

FIG. 1 is a side view of a stroller assembly 10 according to a first embodiment of the present disclosure. FIG. 2 is a perspective view of the stroller assembly 10 with the carrier 14 removed. The stroller assembly 10 includes a stroller frame 12 and a carrier 14 connectable to and removeable from the stroller frame 12. The stroller frame 12 is the rigid support structure of the stroller assembly 10 that provides features for the other components of the stroller assembly 10 to be connected and/or supported. The carrier 14 is the component of the stroller assembly 10 in which the baby or child is supported and sits within, and the carrier 14 can be referred to as the child seat or baby seat. As shown in FIG. 2, the carrier 14 can be removed from the stroller frame 12, and then the carrier 14 can be used as a standalone child seat. The stroller frame 12 includes a front leg 16, a rear leg 18, and a handle assembly 20. In some examples, the stroller frame 12 can include two front legs 16 spaced laterally (i.e., in a widthwise direction) from each other and two rear legs 18 spaced laterally from each other. Further, the rear legs 18 can be spaced from the front legs 16 in a front to back direction of the stroller assembly 10, with respect to the direction the stroller assembly 10 is pushed when in use.

A front wheel 22 can be coupled at an end of each of the front legs 16, such that there are two front wheels 22 that rotate about a horizontal axis of rotation extending between the front wheels 22. A rear wheel 24 can be coupled at an end of each of the rear legs 18, such that there are two rear wheels 24 that rotate about a horizontal rotation axis 26 extending between the rear wheels 24. The horizontal axes of rotation can be substantially parallel to a support surface (i.e., the ground) supporting the stroller assembly 10 when the stroller assembly 10 is in use. In some examples, the front wheels 22 and the rear wheels 24 can be caster type wheels. In other examples, the front wheels 22 and the rear wheels 24 can be other types of wheels. As illustrated in FIG. 2, in some examples, a rear axle does not extend between and connect both the rear wheels 24. Rather, the rear wheels 24 are only connected through the stroller frame 12 and rotate independently of each other. Removing or not including a rear axle between the rear wheels 24 provides a greater opening or space between the rear wheels 24, compared to previous strollers, allowing the caregiver's feet and legs to extend into the opening or space when pushing and walking behind the stroller assembly 10. In other words, the space defined between the rear wheels 24 allows a foot and leg of the caregiver to pass through the horizontal rotation axis 26 of the rear wheels 24 when the caregiver is moving or pushing the stroller assembly 10.

As shown in FIG. 1, a basket 28 can be coupled to the stroller frame 12 and positioned between the front legs 16 and the rear legs 18. The basket 28 can be used to store items to be transported with the stroller assembly 10. In some examples, the stroller assembly 10 may not include the basket 28. The front legs 16 and the rear legs 18 can each be connected to a hub 30 that is positioned between the front legs 16 and the rear legs 18. The hub 30 can be a folding hub 30 that is configured to aid in folding the stroller assembly 10 for transport and storage. In some examples, the stroller assembly 10 can include a first hub 30A on a first lateral side of the stroller assembly 10 between the front leg 16 and the rear leg 18, and a second hub 30B on a second lateral side of the stroller assembly 10 between the front leg 16 and the rear leg 18. In other examples, the stroller assembly 10 may not include a hub 30 whatsoever.

The handle assembly 20 can be connected to both the front legs 16 and the rear legs 18. Specifically, the handle assembly 20 can be connected to the front legs 16 and the rear legs 18 through the hub 30, such that the handle assembly 20 can be folded relative to the hub 30 for storage and transport. The handle assembly 20 extends in an upwards direction away from the front legs 16 and rear legs 18 (i.e., away from the support or ground surface). More specifically, the handle assembly 20 extends from the hub 30 in an upwards and angled direction towards the rear of the stroller assembly 10, which direction is opposite the direction of the front wheels 22. The handle assembly 20 includes a handlebar 32 and a handlebar extender 34. The lateral sides of the handle assembly 20 are connected on each side of the stroller frame 12, and the handlebar 32 extends laterally between the sides of the stroller frame 12, which direction is generally perpendicular to the direction the stroller assembly 10 is pushed when in use. The handlebar 32 also extends laterally between the rear wheels 24 in the horizontal direction. In some examples, the handlebar 32 may be positioned fully between the rear wheels 24. The handlebar 32 is the uppermost portion of the stroller frame 12, relative to the ground or supporting surface upon which the rear wheels 24 and front wheels 22 contact and roll. The handlebar 32 is the portion of the stroller assembly 10 that the user grasps when pushing or maneuvering the stroller assembly 10, and the handlebar 32 can be sized and shaped for gripping by the caregiver.

The handle assembly 20 can be transitioned between different heights to accommodate caregivers of different heights. Specifically, the handle assembly 20 includes the handlebar extender 34 which connects the handlebar 32 to the lower portions of the handle assembly 20 that are connected to the hub 30. The handlebar extender 34 can be a telescopic feature that includes concentric tubular sections designed to slide into and outwards relative to each other. The handlebar 32 can be at a first height above the supporting surface (or the lowermost point of the wheels 22, 24) when the handlebar extender 34 is pushed all the way into the retracted position. The handlebar 32 can be at a second height above the supporting surface (or the lowermost point of the wheels 22, 24) when the handlebar extender 34 is pulled outwards into the extended position, with the second height being greater than the first height. The handlebar extender 34 can include locking features (not shown) to maintain the handlebar 32 at the desired height. As illustrated in FIG. 1, in some examples, the handlebar extender 34 can be transitioned between the first height and the second height by moving the handlebar 32 in a direction that is angularly offset from both a vertical and horizontal direction. In other words, the handlebar32 can be translated in a rearward and upwards angled direction to transition between the first height and the second height. Further, the handlebar 32 can be translated in a forward and downwards angled direction to transition between the second height and the first height.

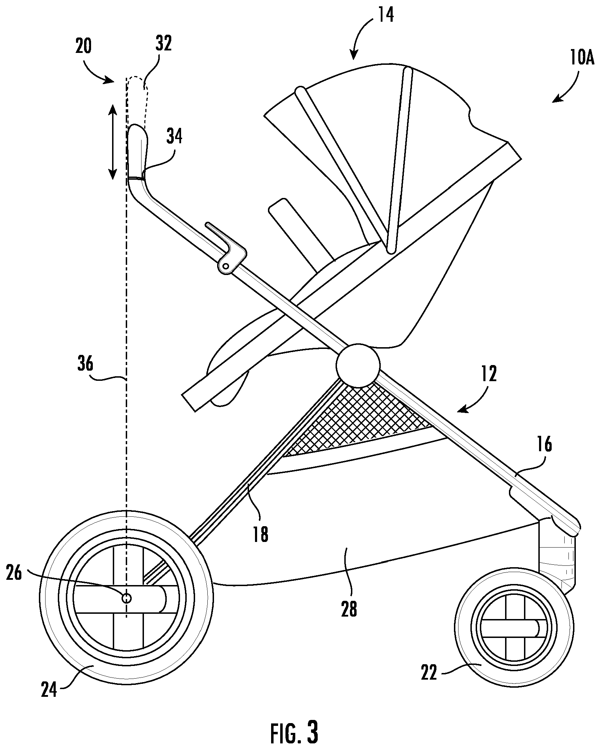

FIG. 3 is a side view of a stroller assembly 10A according to a second embodiment of the present disclosure. The stroller assembly 10A of FIG. 3 is substantially the same as the stroller assembly 10 of FIGS. 1-2, with the only difference being the direction the handlebar extender 34 translates. Specifically, in the stroller assembly 10A of FIG. 3, the handlebar extender 34 translates and extends in a vertical direction with respect to the ground or supporting surface. As such, in some examples, the handlebar extender 34 can be transitioned between the first height and the second height by moving the handlebar 32 in an entirely vertical direction. In other words, the handlebar 32 can be translated entirely upwards to transition between the first height and the second height. Further, the handlebar 32 can be translated entirely downwards to transition between the second height and the first height. Other than the direction of translation of the handlebar extender 34, all other aspects of the stroller assembly 10A are the same as the stroller assembly 10.

Referring to FIGS. 1 and 3, the handlebar 32 of the stroller assembly 10 is align-able with a rotation axis 26 of the rear wheels 24 and/or between the rear wheels 24 and front wheels 22. Although the following disclosure focuses on the stroller assembly 10, it is to be understood that the disclosure also applies to the stroller assembly 10A. Specifically, referring to FIGS. 1 and 3, a vertical axis 36 extending upwards from the rotation axis 26 of the rear wheels 24 is aligned with a rearward side or surface of the handlebar 32. Further, in other non-illustrated examples, the handlebar 32 could be positioned horizontally offset from the vertical axis 36 in a direction towards a center of the stroller assembly 10, such that the handlebar 32 is positioned between the rear wheels 24 and the front wheels 22. By making the handlebar 32 and rear wheels 24 aligned, or the handlebar 32 inwards of the rotation axis 26 of the rear wheels 24, there is a decreased moment arm at the handlebar 32 preventing or reducing the chances of the stroller assembly 10 from toppling or tipping over when weight is applied to the handlebar 32.

Therefore, in either example, the position of the handlebar 32 relative to the rear wheels 24 (i.e., not behind the rotation axis 26 of the rear wheels 24) improves the stability of the stroller assembly 10, thus allowing a caretaker to place a weight on the handlebar 32 without a concern for tipping the stroller assembly 10. More specifically, when the handlebar 32 is positioned vertically above or horizontally inwards of the rotation axis 26 of the rear wheels 24, a downward vertical force applied to the handlebar 32 does not create a moment force about the rotation axis 26 of the rear wheels 24 that will tip over the stroller assembly 10. The downward vertical force is defined as a force applied in a downward direction (i.e., generally parallel with the vertical axis 36) towards the support surface when the stroller assembly 10 is in use.

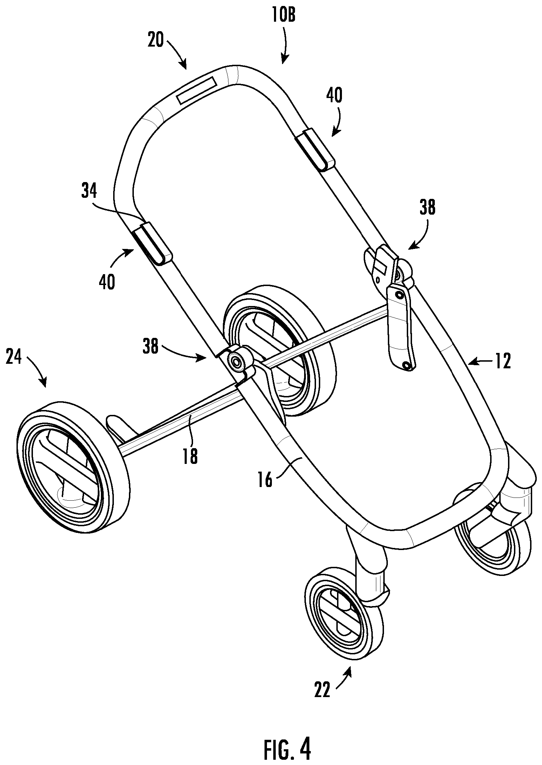

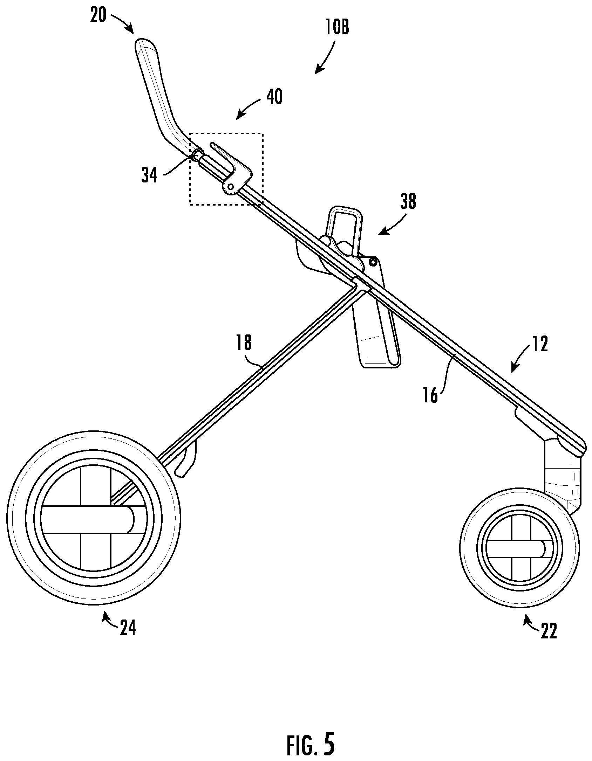

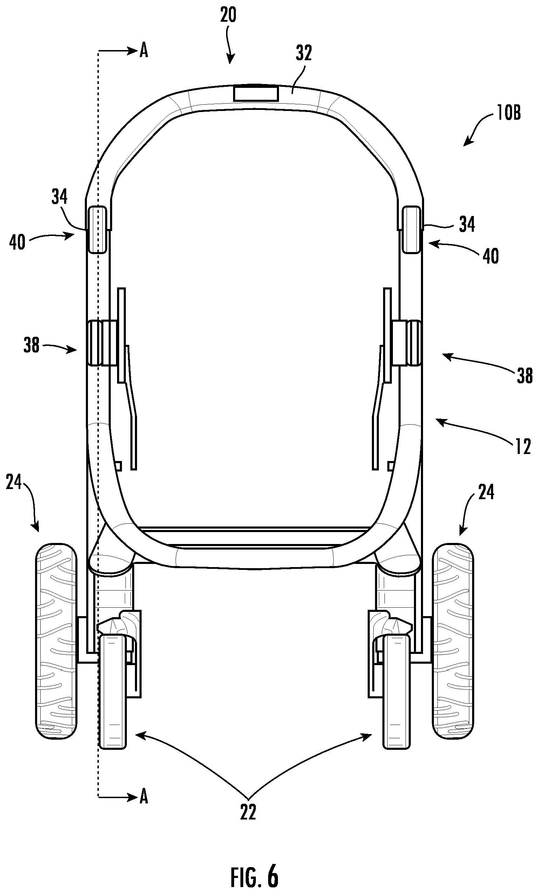

FIG. 4 is a perspective view of a stroller assembly 10B according to a third embodiment of the present disclosure. FIG. 5 is a side view of the stroller assembly 10B. FIG. 6 is a front view of the stroller assembly 10B. The stroller assembly 10B of FIGS. 4-6 is substantially similar to the stroller assembly 10 illustrated in FIGS. 1-3. As such, it is to be understood that the disclosure regarding the stroller assembly 10 with reference to FIGS. 1-3 equally applies to the stroller assembly 10B illustrated in FIGS. 4-6 unless stated otherwise. Therefore, to avoid redundancy, only the differences between the stroller assembly 10 and the stroller assembly 10B are described below. The stroller assembly 10B includes a stroller frame 12 with front legs 16, rear legs 18, and a handle assembly 20. The front wheels 22 are connected to the front legs 16, and the rear wheels 24 are connected to the rear legs 18. The stroller assembly 10B can further include a basket and a carrier, neither of which are illustrated in FIGS. 4-6. The stroller assembly 10B also includes at least one carrier receiver 38 and at least one hook 40.

Specifically, the stroller assembly 10B of FIGS. 4-6 includes a first carrier receiver 38 positioned on and coupled to a first lateral side of the stroller frame 12, and a second carrier receiver 38 positioned on and coupled to a second lateral side of the stroller frame 12. As illustrated, in some examples, the carrier receivers 38 can be positioned on the inside or interior of the stroller frame 12. In other non-illustrated examples, the carrier receivers 38 can be positioned on the outside or exterior of the stroller frame 12. The carrier receivers 38 are configured to be coupled to mating connectors (not shown) on the carrier 14 illustrated in FIGS. 1 and 3, such that the carrier receivers 38 support and provide the connection point for the carrier 14 to the stroller frame 12. In some examples, as illustrated, the carrier receivers 38 can be positioned at approximately the intersection point of the front legs 16, the rear legs 18, and the handle assembly 20.

The stroller assembly 10B of FIGS. 4-6 also include a first hook 40 positioned on and coupled to a first lateral side of the stroller frame 12, and a second hook 40 positioned on and coupled to a second lateral side of the stroller frame 12. Specifically, the first and second hooks 40 are positioned on and coupled to the first and second lateral sides of the handle assembly 20, respectively. More specifically, the first and second hooks 40 are coupled to the first and second lateral sides of the handle assembly 20 adjacent the handlebar extender 34. In some examples, as illustrated, the hooks 40 can be positioned on an upper or top surface of the handle assembly 20, relative to the ground or supporting surface (i.e., facing away from the ground or supporting surface). In other non-illustrated examples, the hooks 40 can be positioned on the inner or outer sides of the handle assembly 20. In yet further non-illustrated examples, the hooks 40 can be positioned on a bottom side or surface of the handle assembly 20. The hooks 40 are configured to provide a location in which a caregiver can hang an item from when using the stroller assembly 10B, such as for example a bag, purse, clothing, basket, etc.

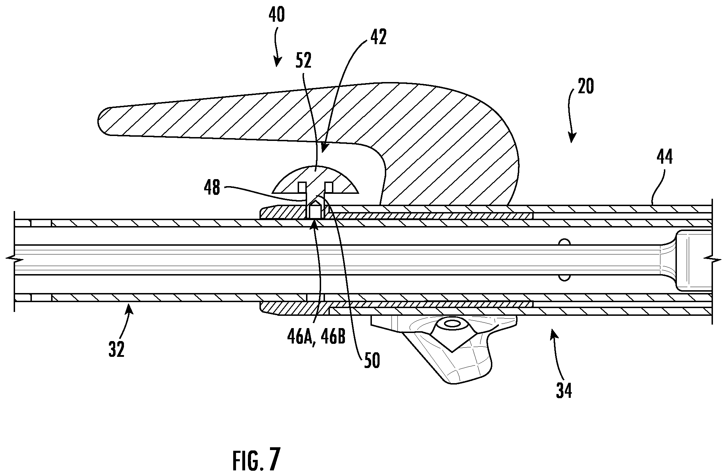

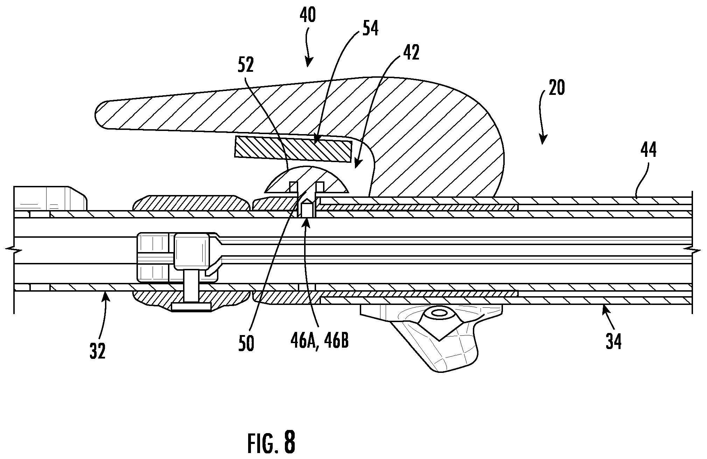

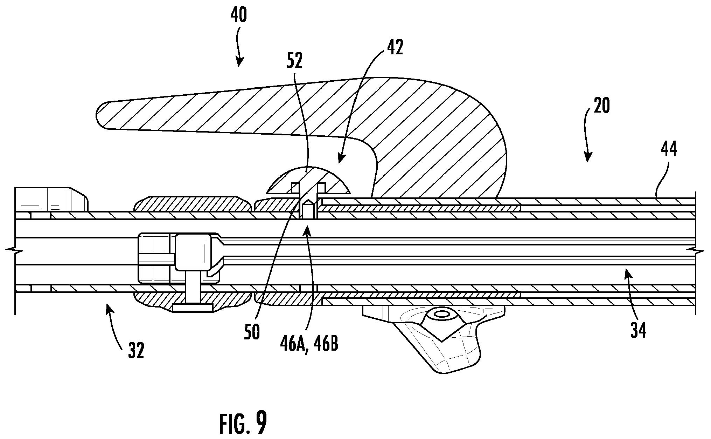

FIG. 7 is a first magnified partial cross-sectional view of the hook 40 of the stroller assembly 10B, taken along Section A-A in FIG. 6, with a lock 42 disengaged. FIG. 8 is a second magnified partial cross-sectional view of the hook 40 of the stroller assembly 10B, taken along Section A-A in FIG. 6, with the lock 42 engaged. FIG. 9 is a third magnified partial cross-sectional view of the hook 40 of the stroller assembly 10B, taken along Section A-A in FIG. 6, with the lock 42 engaged. As described, the hook 40 is coupled to the handle assembly 20 at a position adjacent the handlebar extender 34. The handlebar 32 is telescopically connected to a lower tube 44 of the handle assembly 20, forming the handlebar extender 34. The lock 42 is connected to the lower tube 44 of the handle assembly 20, and the lock 42 is configured to prevent translation of the handlebar 32 relative to the lower tube 44 (i.e., prevent the handlebar 32 from extending from the first height to the second height).

Specifically, an aperture 46A, 46B extends through the end portions of the handlebar 32 and the lower tube 44, respectively, of the handle assembly 20, with the apertures 46A, 46B being axially aligned when the lock 42 is in the locked configuration. The apertures 46A, 46B can be circular apertures 46A, 46B that have a complimentary mating shape to a shaft portion 50 of the lock 42. The lock 42 is connected to the lower tube 44 through a spring 48 positioned between a head portion 52 of the lock 42 and a radially outer surface of the lower tube 44 of the handle assembly 20. The spring 48 is configured to force the lock 42 in a radially outwards direction relative to the lower tube 44, such that the lock 42 is unlocked or disengaged when in the relaxed position. The shaft portion 50 of the lock 42 remains within the aperture 46B of the lower tube 44, but removed from or disengaged from the aperture 46A of the handlebar 32 when the lock 42 is unlocked. This allows the handlebar 32 to axially translate relative to the lower tube 44, to change between the first and second heights as previously described. In some examples, the lock 42 can be a spring biased rivet, bolt, fastener, etc. that is configured to remain in the unlocked orientation until an external force causes the lock 42 to change into the locked position.

Referring to FIG. 8, a weight 54 is schematically illustrated to show how the lock 42 changes from the unlocked to locked orientation. In some examples, the weight 54 can be a downward force produced by hanging a purse, small bag, clothing, etc. on the hook 40, such that the weight 54 engages the head portion 52 of the lock 42 which compresses the spring 48 and causes the shaft portion 50 of the lock 42 to translate into the apertures 46A, 46B until the shaft portion 50 is engaged with both apertures 46A, 46B and the head portion 52 contacts or is positioned adjacent the radially outer surface of the lower tube 44. The aforementioned movement of the lock 42 changes the lock 42 from the unlocked to locked orientation, and prevents the handlebar 32 from translating relative to the lower tube 44. Specifically, with the shaft portion 50 of the lock 42 engaged and extending through both the apertures 46A, 46B, the handlebar 32 cannot axially translate to the extended or second height because the shaft portion 50 contacts a radially inner surface of the aperture 46A of the handlebar 32 when a user attempts to pull the handlebar 32 upwards and outwards. When the weight 54 (i.e., downwards force) is removed from the head portion 52 of the lock 42 (FIG. 9), the spring 48 is configured to force the lock 42 in a direction towards the hook 40, which is a radially outwards direction relative to the lower tube 44, back into the relaxed and unlocked orientation, as illustrated in FIG. 7. With the lock 42 again in the unlocked orientation, the shaft portion 50 of the lock 42 is no longer engaged with the aperture 46A of the handlebar 32, allowing the handlebar 32 to translate relative to the lower tube 44 of the handle assembly 20.

Although not specifically illustrated, it is to be understood that the hook 40 and/or lock 42 can be included in each of the different stroller assembly embodiments 10, 10A, 10B disclosed with reference to FIGS. 1-6 of the present disclosure. Further, it is to be understood that the weight 54 can be applied to the handlebar 32 only when the handlebar 32 is in a retracted position (e.g. aligned above the rear wheels 24 or between the front wheels 22 and the rear wheels 24). To prevent adding weight 54 to the handlebar 32 in an extended position (e.g. positioned rearward of the rear wheels 24), the lock 42 can prevent the handlebar 32 from translating (e.g. moving rearward of the rear wheels 24) when the weight 54 is applied to the lock 42. In an aspect, the one or more hooks 40 are configured to receive the weight, and the one or more hooks 40 can be configured to only receive the weight 54 when the handlebar 32 is in a retracted position. For example, the one or more hooks 40 can transition between an extended position and a retracted position. When the handlebar 32 is in the retracted position, the one or more hooks 40 can be in the extended position such that the one or more hooks 40 can receive and support the weight 54. When the handlebar 32 is transitioned to the extended position, the one or more hooks 40 can transition to the retracted position in which the one or more hooks 40 are not able to receive and support the weight 54.

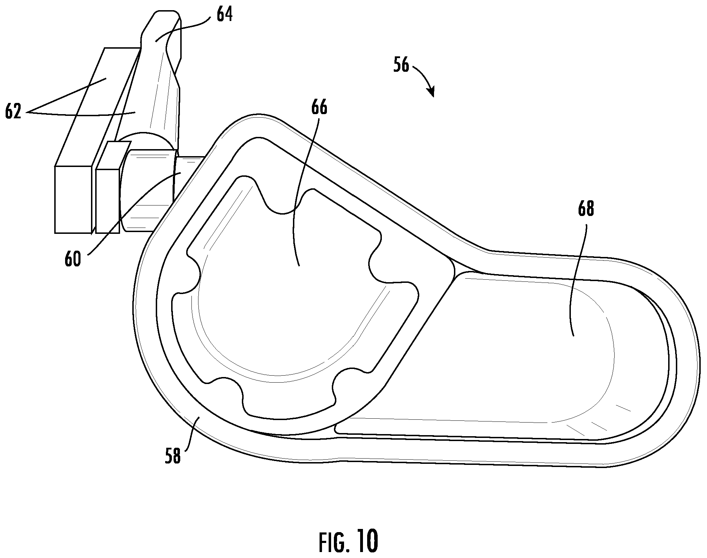

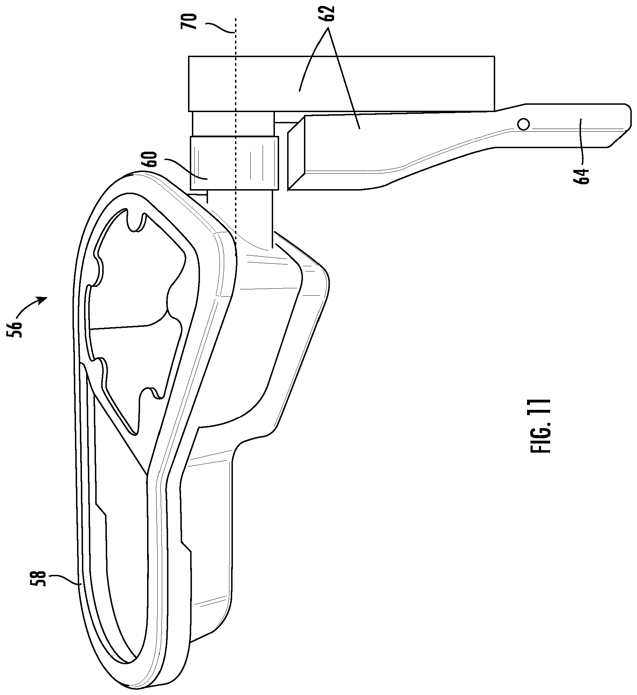

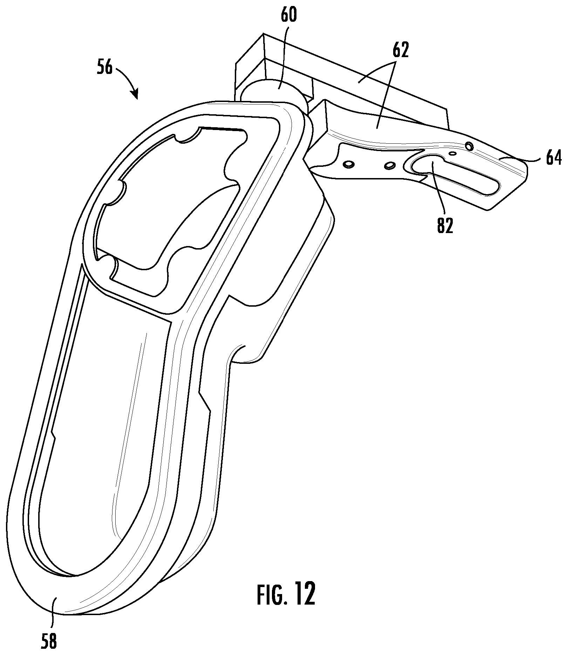

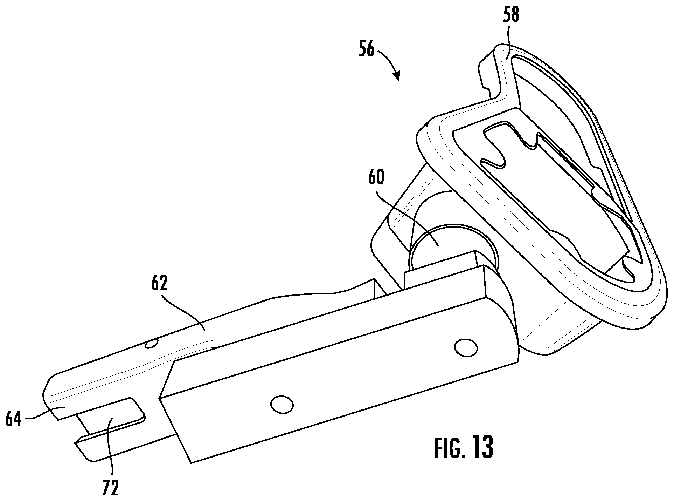

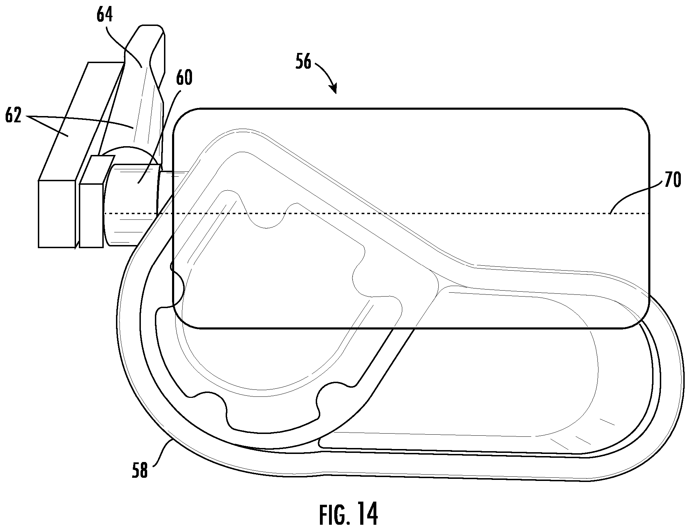

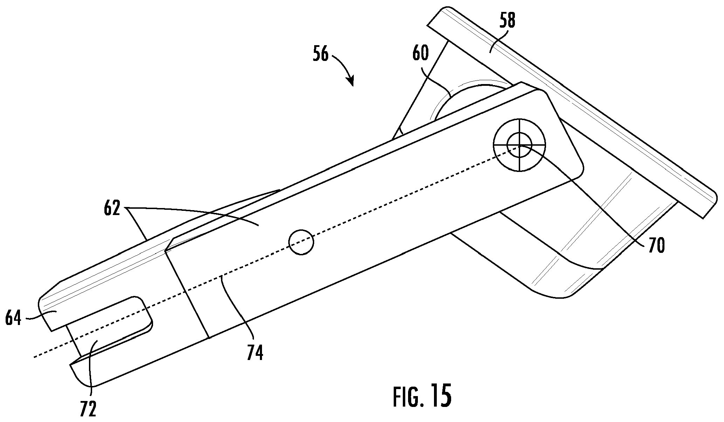

FIG. 10 is a front view of an accessory 56 connectable to a stroller assembly 10. FIG. 11 is a rear view of the accessory 56. FIG. 12 is a first perspective view of the accessory 56. FIG. 13 is a second perspective view of the accessory 56. FIG. 14 is another front view of the accessory 56. FIG. 15 is a side view of the accessory 56. FIGS. 10-15 will be discussed together. Although not specifically illustrated, it is to be understood that the accessory 56 can be included in each of the different stroller assembly embodiments 10, 10A, 10B of the present disclosure.

The accessory 56 is a component that is connectable to the stroller assembly 10 (also stroller assemblies 10A, 10B, etc.). In some examples, as illustrated, the accessory 56 can include an accessory tray 58 which can be a stroller tray and/or cup holder, which can be used to place food/toys/etc. and/or a drink/cup/liquid for the child sitting within the carrier 14. The accessory 56 can be coupled and mounted to the left and right sides of the stroller assembly 10, specifically the left and right sides of the stroller frame 12, eliminating the need for separate left and right accessories as are used in previous stroller assemblies. As described in detail below, the accessory 56 includes a rotation feature for proper positioning of the accessory tray 58 when switching between left and right sides of the stroller assembly 10. The accessory 56 may be sized and positioned, and/or rotatably mounted, so as to allow folding of the stroller assembly 10 while mounted.

The accessory 56 includes the accessory tray 58, a pivot connector 60, an arm 62, and a connector 64. The accessory tray 58 can be a stroller tray and/or cup holder, which can be used to place food/toys/etc. and/or a drink/cup/liquid for the child sitting within the carrier 14. Specifically, the accessory tray 58 can be shaped and sized to place items/cups for the child to grasp and interact with when in the carrier 14. As such, the accessory tray 58 includes a base portion with raised side walls such that the items placed within the accessory tray 58 do not slide or fall out of the accessory tray 58 when the stroller assembly 10 is in use. In some examples, the accessory tray 58 can include a cup holder portion 66 and a tray portion 68. The cup holder portion 66 can include the general shape of a standard cup holder that is configured to secure a baby cup or other beverage container. The tray portion 68 can be connected to the cup holder portion 66 and extend outwards from the cup holder portion 66 in a direction away from the arm 62. The tray portion 68 can include generally an elongated oval shape, and a dividing wall can be positioned between the cup holder portion 66 and the tray portion 68.

The arm 62 of the accessory 56 is coupled to the accessory tray 58 through the pivot connector 60. The pivot connector 60 is positioned at one distal end of the accessory tray 58, and the pivot connector 60 is configured to allow relative rotation between the arm 62 and the accessory tray 58. Specifically, the pivot connector 60 is connected to a distal sidewall of the cup holder portion 66, which distal end is opposite the tray portion 68. The pivot connector 60 can be any component that allows relative rotation between the accessory tray 58 and the arm 62. In some examples, the pivot connector 60 can be a rivet, pin, or rod extending between and connecting the arm 62 and the accessory tray 58. In some examples, the pivot connector 60 can have some resistance or friction that allows the accessory tray 58 to be stopped and held at any desired position relative to the arm 62. The pivot connector 60 includes a pivot axis 70 about which the accessory tray 58 and the arm 62 pivot or rotate relative to each other. The pivot axis 70 extends axially from or through a cylindrical portion of the pivot connector 60. The accessory 56 is oriented symmetrical about the pivot axis 70, allowing the accessory 56 to be compatible for both left and right sides of the stroller assembly 10, described further below.

The arm 62 can be an elongated rod, shaft, or feature that is connected to the pivot connector 60, and which arm 62 extends generally perpendicular to the pivot axis 70 of the pivot connector 60. The arm 62 can have any desired shape and size to orient the accessory 56 at the desired position in front of the carrier 14 when the accessory 56 is connected to the stroller assembly 10. As described, the arm 62 is pivotable or rotatable about the pivot axis 70 to change the orientation of the arm 62 relative to the accessory tray 58. The end of the arm 62 that is not connected to the pivot connector 60 (i.e., the free end of the arm 62) includes the connector 64 that is configured to be coupled to the stroller frame 12 of the stroller assembly 10.

Specifically, the connector 64 can be a hollow or open end of the arm 62 that is configured to slide onto a stroller connector 76A, 76B of the stroller assembly 10, described in detail below. As such, the connector 64 includes a mating shape (i.e., female mating shape) with the stroller connector 76A, 76B (i.e., male mating shape). The connector 64 further includes a connector slot 72 that extends from the distal free end of the arm 62 in a direction towards the pivot connector 60, parallel to the extension direction of the arm 62. The connector slot 72 extends fully through a sidewall of the arm 62 and only a partial distance up the arm 62, on the side of the arm 62 facing away from the accessory tray 58. In some examples, the connector slot 72 can be generally rectangular in shape. The connector slot 72 is oriented such that a centerline 74 of the connector slot 72 is aligned with or intersects the pivot axis 70, in a direction parallel to the extension direction of the arm 62. In other words, both the centerline 74 of the connector slot 72 and the pivot axis 70 are positioned on a centerline of the outside side surface of the arm 62, facing away from the accessory tray 58. Such a configuration ensures that the accessory 56 is compatible with both the left and right sides of the stroller assembly 10.

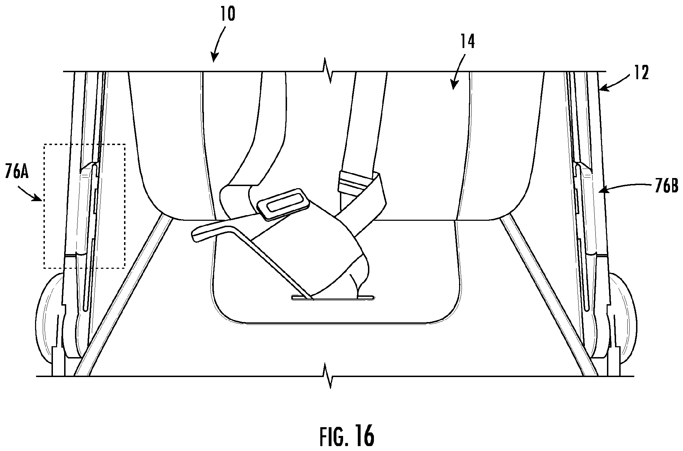

FIG. 16 is a magnified view of a portion of the stroller assembly 10 without the accessory 56 attached. As illustrated in FIG. 16, the stroller assembly 10 includes the carrier 14 connected to the stroller frame 12. The view in FIG. 16 is a magnified view which illustrates generally the portion of the stroller assembly 10 where a seat base of the carrier 14 is connected to a backrest of the carrier 14, from a front view. Further, as illustrated, a first stroller connector 76A and a second stroller connector 76B can be coupled to or formed integral with the left and right lateral sides of the stroller frame 12. Specifically, the first stroller connector 76A and the second stroller connector 76B can be positioned on the interior sides of the stroller frame 12, such that the first stroller connector 76A and the second stroller connector 76B are positioned adjacent the outside surfaces of the carrier 14, when the carrier 14 is connected to the stroller frame 12.

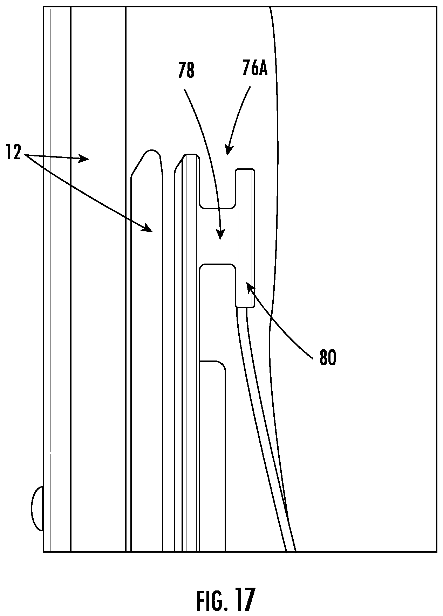

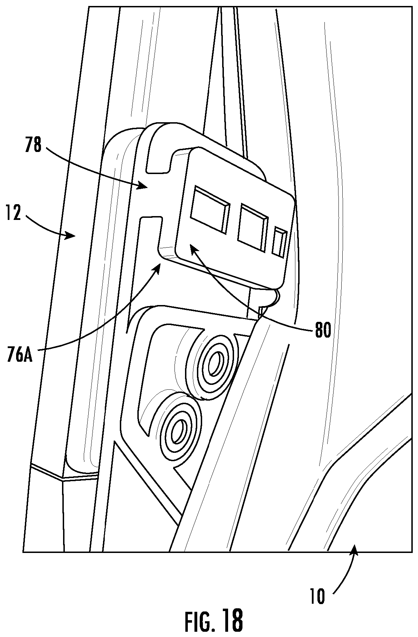

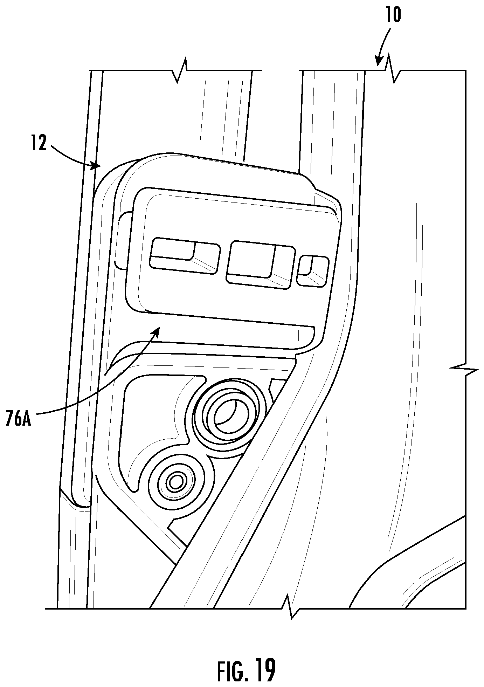

FIG. 17 is a magnified front view of the first stroller connector 76A of the stroller assembly 10, as indicated in FIG. 16. FIG. 18 is a magnified perspective view of the first stroller connector 76A. FIG. 19 is a magnified side view of the first stroller connector 76A. It is to be understood that the following disclosure focuses only on the first stroller connector 76A, but the disclosure equally applies to the second stroller connector 76B. To avoid redundancy, only the disclosure regarding the first stroller connector 76A will be provided. The first stroller connector 76A is positioned on, coupled to, and/or formed integral with an interior surface of the stroller frame 12. The first stroller connector 76A includes a generally elongated T-shaped cross-section. A base portion 78 of the T-shaped first stroller connector 76A is connected to the stroller frame 12 and a top portion 80 of the T-shaped first stroller connector 76A extends inwards towards a center of the stroller assembly 10. The top portion 80 of the first stroller connector 76A can be described as wings that extend perpendicularly outwards from the base portion 78 of the first stroller connector 76A. The first stroller connector 76A is shaped and sized to form a mating connection with the connector 64 of the arm 62 of the accessory 56.

Specifically, the connector 64 of the arm 62 of the accessory 56 can be slid onto the first stroller connector 76A such that the top portion 80 of the first stroller connector 76A is positioned within the hollow opening of the connector 64, and the base portion 78 of the first stroller connector 76A extends through the connector slot 72. The connector 64 is slid onto the first stroller connector 76A until the end of the connector slot 72 engages the outwardly facing end of the base portion 78 of the first stroller connector 76A. The connector 64 can include a locking feature (not shown) that secures the connector 64 to the first stroller connector 76A. Further, the accessory 56 can include a button 82 (see FIG. 12) that is configured to disengage the connector lock, allowing the accessory 56 to be removed from the stroller assembly 10.

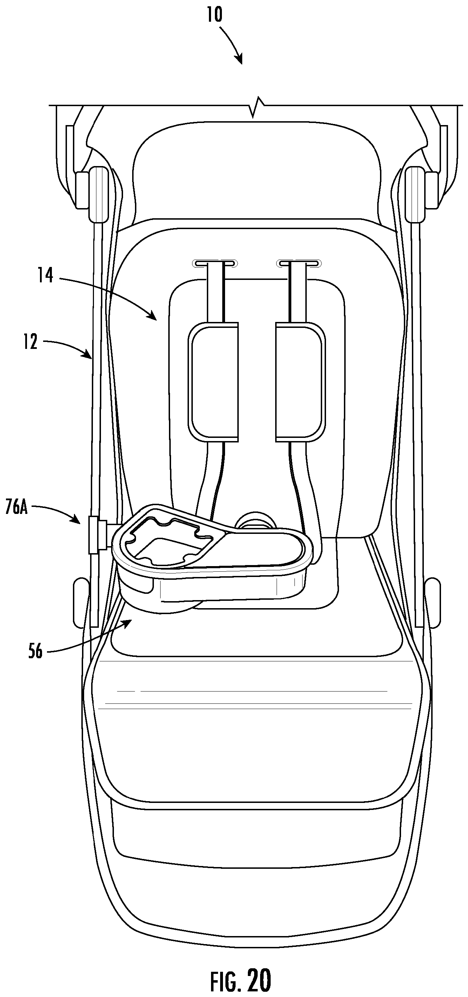

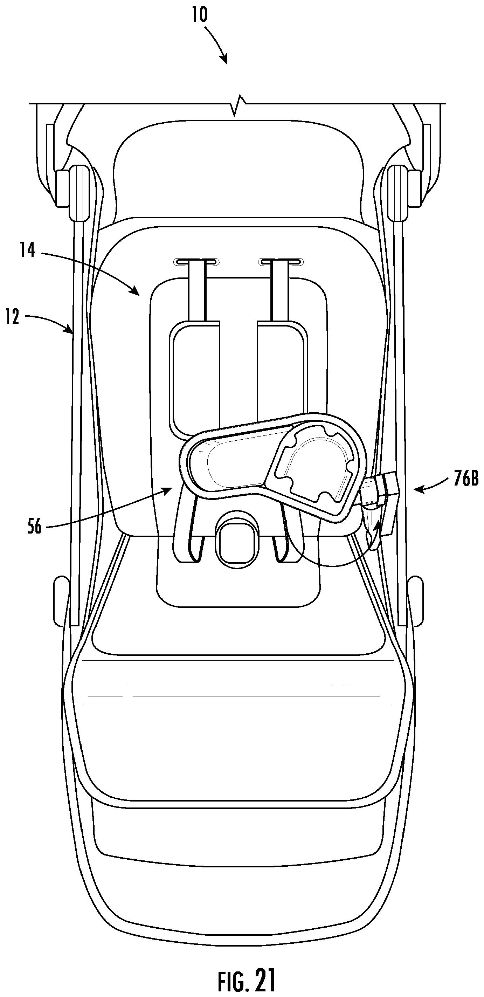

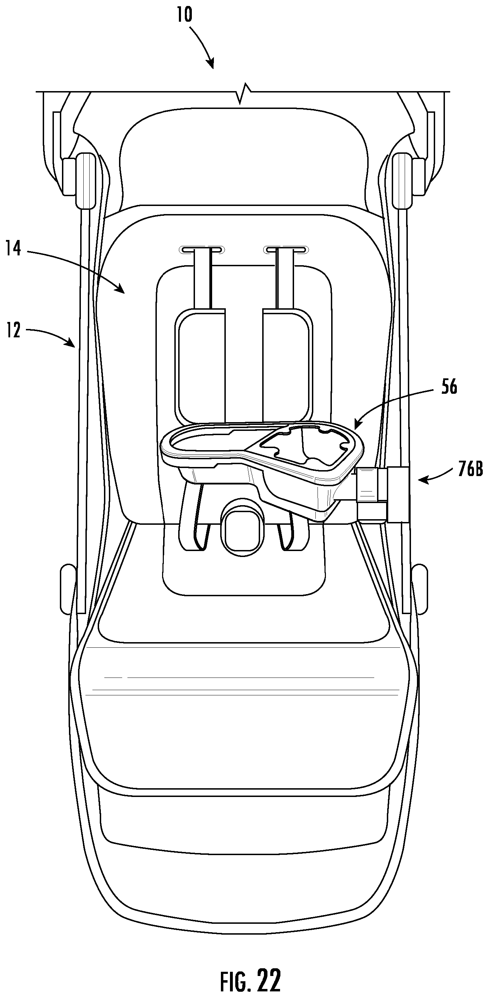

FIG. 20 is a front view of the stroller assembly 10 with the accessory 56 connected to the first stroller connector 76A, as described with reference to FIGS. 17-19. When the accessory 56 is connected to the first stroller connector 76A, the accessory tray 58 can be rotated about the pivot axis 70 to orient the accessory tray 58 as desired to prevent the items within the accessory tray 58 from falling out. FIG. 21 is a front view of the stroller assembly 10 with the accessory 56 connected to the second stroller connector 76B, and in the process of rotating. Specifically, after the accessory 56 is removed from the first stroller connector 76A and slid onto the second stroller connector 76B, the accessory tray 58 is in the position as shown in FIG. 21, which is an unusable position. As such, the accessory tray 58 must be rotated about the pivot axis 70 towards the backrest of the carrier 14 until the accessory tray 58 is orientated in the position as shown in FIG. 22, which position prevents the items within the accessory tray 58 from falling out.

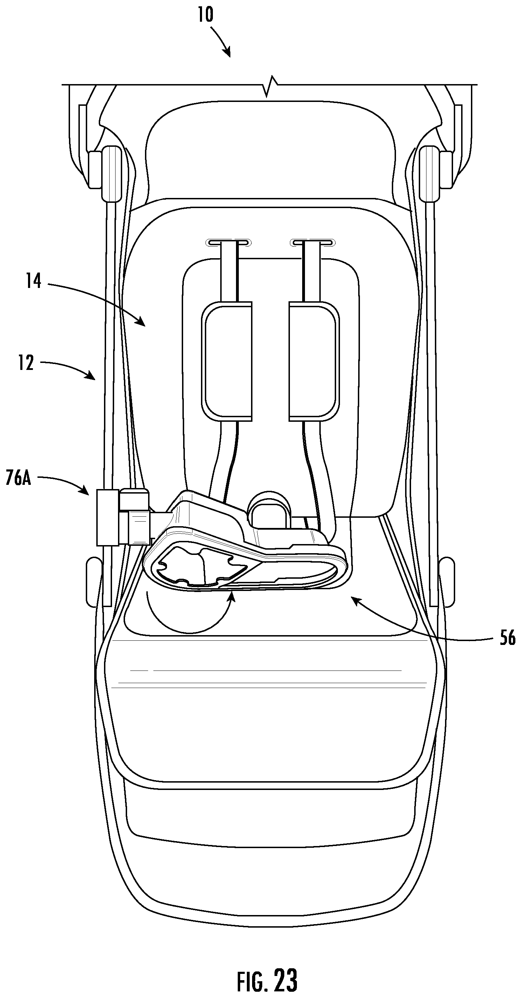

Likewise, FIG. 23 is a front view of the stroller assembly 10 with the accessory 56 connected to the first stroller connector 76A, and in the process of rotating. Specifically, after the accessory 56 is removed from the second stroller connector 76B and slid onto the first stroller connector 76A, the accessory tray 58 is in the position as shown in FIG. 23, which is an unusable position. As such, the accessory tray 58 must be rotated about the pivot axis 70 towards the backrest of the carrier 14 until the accessory tray 58 is orientated in the position as shown in FIG. 20, which position prevents the items within the accessory tray 58 from falling out. The accessory 56 of the present disclosure is mountable to either a left side or right side of the stroller frame 12 of the stroller assembly 10, and the accessory 56 includes features allowing it to be rotated to be readily usable by a child in the corresponding carrier 14.

The above-described example embodiments may be implemented in various configurations and operated with various methods which are listed below:
1. A stroller assembly comprising:
   a stroller frame comprising:
   a front leg having at least one front wheel connected thereto;
   a first rear leg and a second rear leg connected to the front leg, the first and second rear legs having a rear wheel connected to each one of the first and second rear legs, the rear wheels being rotatable about a horizontal rotation axis of the rear wheels, and the rear wheels being spaced from the at least one front wheel in a rearward direction, the rearward direction being perpendicular to the horizontal rotation axis; and
   a handle assembly connected to the front leg and the first and second rear legs, the handle assembly comprising a handlebar positioned between the rear wheels, and the handlebar is:
   aligned with a vertical axis extending through and perpendicular to the horizontal rotation axis; or
   offset from the vertical axis such that the handlebar is positioned closer to a center of the stroller frame than the horizontal rotation axis.
2.The stroller assembly of claim 1, wherein the first and second rear legs are rotatably connected to the front leg through a rotatable hub.
3.The stroller assembly of claim 1, wherein the handle assembly is transitionable between a first height above a support surface and a second height above the support surface, wherein the second height is greater than the first height.
4.The stroller assembly of claim 3, wherein at the second height the handlebar is vertically above the handlebar at the first height, such that the handlebar transitions to the second height from the first height in a vertical direction.
5.The stroller assembly of claim 3, wherein at the second height the handlebar is vertically above and rearwardly offset from the handlebar at the first height.
6.The stroller assembly of claim 1, wherein the rearward direction extends from the front wheel to rear wheels.
7.The stroller assembly of claim 1, wherein a carrier is connectable to and removable from the stroller frame.
8.The stroller assembly of claim 1, wherein at least one of the front wheel and the rear wheels comprises a castor wheel.
9.The stroller assembly of claim 1, wherein a space is defined between the rear wheels such that a foot of a caregiver can pass through the horizontal rotation axis extending between the rear wheels.
10.The stroller assembly of claim 1, wherein the rear wheels are only connected to each other through the rear legs, and the front leg or the handle assembly, of the stroller frame.
11.The stroller assembly of claim 1, further comprising a hook configured to support a weight applied to the stroller frame.
12.The stroller assembly of claim 11, wherein a first hook is coupled to the stroller frame on a first lateral side of the stroller frame, and a second hook is coupled to the stroller frame on a second lateral side of the stroller frame.
13.The stroller assembly of claim 11, wherein the hook is coupled to the stroller frame adjacent a handlebar extender of the handle assembly.
14.The stroller assembly of claim 13, wherein the handlebar extender is a telescopic handlebar extender.
15.The stroller assembly of claim 1, further comprising a lock disposed between the handle assembly and a hook coupled to the stroller frame.
16.The stroller assembly of claim 15, wherein the lock is coupled to a lower tube of the handle assembly, and the lock is spring biased radially outwards relative to the lower tube.
17.The stroller assembly of claim 16, wherein a shaft portion of the lock is configured to translate into an aperture within the handle assembly when a force is applied to a head portion of the lock, causing the lock to translate radially inwards relative to the lower tube.
18.The stroller assembly of claim 17, wherein the shaft portion being engaged with the aperture causes the lock to be in a locked configuration, preventing the handlebar from translating relative to the lower tube.
19.The stroller assembly of claim 17, wherein when the force is removed from the lock, a spring of the lock forces the lock radially outwards relative to the lower tube, into an unlocked configuration.
20. A stroller assembly comprising:
   a stroller frame having front legs, rear legs, and a handle assembly;
   a carrier that is connectable to and removable from the stroller frame; and
   an accessory connectable to and removable from at least one of the stroller frame and the carrier, the accessory comprising an accessory tray, a pivot connector, and an arm comprising a connector, the connector being configured to engage either one of a first stroller connector and a second stroller connector, wherein the accessory tray is pivotably connected to the arm through the pivot connector.
21.The stroller assembly of claim 20, wherein the accessory tray comprises a tray portion and a cup holder portion.
22.The stroller assembly of claim 20, wherein the connector comprises a connector slot extending through a sidewall of the arm, the connector slot being configured to engage a portion of the first or second stroller connector.
23.The stroller assembly of claim 22, wherein the connector slot is aligned with a centerline of an outside surface of the arm, and the connector slot intersects a pivot axis of the pivot connector.
24.The stroller assembly of claim 20, wherein the pivot connector is positioned between the accessory tray and the arm.
25.An accessory tray assembly for a stroller, the accessory tray assembly comprising:
   an arm comprising a connector having a connector slot defining a centerline;
   an accessory tray; and
   a pivot connector positioned between the arm and the accessory tray, the pivot connector being located along the centerline.
26.The accessory tray assembly of claim 25, wherein the accessory tray comprises a tray portion and a cup holder portion.
27.The accessory tray assembly of claim 25, wherein the connector slot extends through a sidewall of the arm, the connector slot being configured to engage a portion of a first or second stroller connector.
28.The accessory tray assembly of claim 25, wherein the connector slot is aligned with a centerline of an outside surface of the arm, and the connector slot intersects a pivot axis of the pivot connector.
29.The accessory tray assembly of claim 25, wherein the pivot connector is positioned between the accessory tray and the arm.

Having thus described the illustrated embodiments in detail, it is to be appreciated and will be apparent to those skilled in the art that many physical changes, only a few of which are exemplified in the detailed description of the disclosure, could be made without altering the inventive concepts and principles embodied therein. It is also to be appreciated that numerous embodiments incorporating only part of the illustrated embodiment are possible which do not alter, with respect to those parts, the inventive concepts and principles embodied therein.

The present embodiment and optional configurations are therefore to be considered in all respects as exemplary and/or illustrative and not restrictive, the scope of the disclosure being indicated by the appended claims rather than by the foregoing description, and all alternate embodiments and changes to this embodiment which come within the meaning and range of equivalency of said claims are therefore to be embraced therein.

## Claims

1. A stroller assembly comprising:
a stroller frame comprising:
a front leg having at least one front wheel connected thereto;
a first rear leg and a second rear leg connected to the front leg, the first and second rear legs having a rear wheel connected to each one of the first and second rear legs, the rear wheels being rotatable about a horizontal rotation axis of the rear wheels, and the rear wheels being spaced from the at least one front wheel in a rearward direction, the rearward direction being perpendicular to the horizontal rotation axis; and
a handle assembly connected to the front leg and the first and second rear legs, the handle assembly comprising a handlebar positioned between the rear wheels, and the handlebar is:
aligned with a vertical axis extending through and perpendicular to the horizontal rotation axis; or
offset from the vertical axis such that the handlebar is positioned closer to a center of the stroller frame than the horizontal rotation axis.

2. The stroller assembly of claim 1, wherein the first and second rear legs are rotatably connected to the front leg through a rotatable hub.

3. The stroller assembly of claim 1 or 2, wherein the handle assembly is transitionable between a first height above a support surface and a second height above the support surface, wherein the second height is greater than the first height;
wherein, optionally:
at the second height the handlebar is vertically above the handlebar at the first height, such that the handlebar transitions to the second height from the first height in a vertical direction; or
at the second height the handlebar is vertically above and rearwardly offset from the handlebar at the first height.

4. The stroller assembly of any of the preceding claims,
wherein the rearward direction extends from the front wheel to rear wheels; and/or
wherein a carrier is connectable to and removable from the stroller frame; and/or
wherein at least one of the front wheel and the rear wheels comprises a castor wheel; and/or
wherein a space is defined between the rear wheels such that a foot of a caregiver can pass through the horizontal rotation axis extending between the rear wheels.

5. The stroller assembly of any of the preceding claims, wherein the rear wheels are only connected to each other through the rear legs, and the front leg or the handle assembly, of the stroller frame.

6. The stroller assembly of any of the preceding claims, further comprising a hook configured to support a weight applied to the stroller frame; wherein, optionally, a first hook is coupled to the stroller frame on a first lateral side of the stroller frame, and a second hook is coupled to the stroller frame on a second lateral side of the stroller frame.

7. The stroller assembly of claim 6, wherein the hook is coupled to the stroller frame adjacent a handlebar extender of the handle assembly; wherein, optionally, the handlebar extender is a telescopic handlebar extender.

8. The stroller assembly of any of the preceding claims, further comprising a lock disposed between the handle assembly and a hook coupled to the stroller frame.

9. The stroller assembly of claim 8, wherein the lock is coupled to a lower tube of the handle assembly, and the lock is spring biased radially outwards relative to the lower tube.

10. The stroller assembly of claim 9, wherein a shaft portion of the lock is configured to translate into an aperture within the handle assembly when a force is applied to a head portion of the lock, causing the lock to translate radially inwards relative to the lower tube.

11. The stroller assembly of claim 10, wherein the shaft portion being engaged with the aperture causes the lock to be in a locked configuration, preventing the handlebar from translating relative to the lower tube.

12. The stroller assembly of claim 10, wherein when the force is removed from the lock, a spring of the lock forces the lock radially outwards relative to the lower tube, into an unlocked configuration.

13. The stroller assembly according to any of claims 1 - 3 or 5 to 12, further comprising:
a stroller frame having front legs comprising the front leg and rear legs comprising the first rear leg and the second rear leg;
a carrier that is connectable to and removable from the stroller frame; and
an accessory connectable to and removable from at least one of the stroller frame and the carrier, the accessory comprising an accessory tray, a pivot connector, and an arm comprising a connector, the connector being configured to engage either one of a first stroller connector and a second stroller connector, wherein the accessory tray is pivotably connected to the arm through the pivot connector.

14. The stroller assembly of claim 13,
wherein the accessory tray comprises a tray portion and a cup holder portion; and/or
wherein the connector comprises a connector slot extending through a sidewall of the arm, the connector slot being configured to engage a portion of the first or second stroller connector; in particular, wherein the connector slot is aligned with a centerline of an outside surface of the arm, and the connector slot intersects a pivot axis of the pivot connector; and/or
wherein the pivot connector is positioned between the accessory tray and the arm.

15. The stroller assembly according to any of claims 1 to 12, further comprising an accessory tray assembly for a stroller, the accessory tray assembly comprising:
an arm comprising a connector having a connector slot defining a centerline;
an accessory tray; and
a pivot connector positioned between the arm and the accessory tray, the pivot connector being located along the centerline;
wherein, optionally:
the accessory tray comprises a tray portion and a cup holder portion; and/or
the connector slot extends through a sidewall of the arm, the connector slot being configured to engage a portion of a first or second stroller connector; and/or
the connector slot is aligned with a centerline of an outside surface of the arm, and the connector slot intersects a pivot axis of the pivot connector; and/or
the pivot connector is positioned between the accessory tray and the arm.
